# EUROPEAN PATENT SPECIFICATION

(11) **EP 2 072 839 B1**
(45) Date of publication and mention of the grant of the patent: **11.08.2010**
(21) Application number: 07425820.3
(22) Date of filing: 21.12.2007
(51) Int. Cl.: F16B 13/14, E04C 1/41

(54) **Proceeding for manufacturing an insulating building product for buildings and building product thereby obtained**
Herstellungsverfahren eines isolierenden Konstruktionsproduktes für Gebäude und so hergestelltes Produkt
Procédé de fabrication de blocs de construction isolants pour le batiment et produit ainsi obtenu

(43) Date of publication of application: 24.06.2009
(73) Proprietor: Tarello, Marco, 13866 Masserano (BI) (IT)
(72) Inventor: Tarello, Marco, 13866 Masserano (BI) (IT)
(74) Representative: Tansini, Elio Fabrizio

(56) References cited:
- DE-A1-102006 021 513
- DE-U1- 29 617 495

## Description

The present invention relates to a proceeding for manufacturing an insulating building product for buildings and to an insulating building product obtainable with said proceeding.

In particular, the present invention is suitable for use in the building field and more specifically for houses, buildings and similar constructions requiring an appropriate thermal and/or acoustic insulation from the surrounding environment.

Generally, manufacture of the outside main walls of said buildings takes place through formation of a first wall designed to constituite the inner face of the wall, made up of bricks vertically piled up according to horizontal courses. A series of insulating panels is subsequently applied onto the external side of the first wall, by suitable fastening means, so as to define a substantially continuous insulating layer. Then a second wall of bricks is erected which is designed to constitute the outer face of the wall. The second wall of bricks can be either directly manufactured against the insulating panels thus forming a single body, or manufactured to a predetermined distance from the insulating panels so as to define an air space for aeration and/or arrangement of electric elements or other elements.

Another known and widespread technique for manufacturing insulating walls contemplates formation of an inner brick-made wall and, subsequently, of an outer brick-made wall spaced apart from the first one, so as to define an air space therebetween. Finally, an expandable insulating material is poured into the air space, which material solidifies thereby defining an insulating layer.

In order to obtain better insulation and simplify the building operations, a type of insulating building product for buildings has been put on the market which substantially comprises two blocks usually made of a brick material such as mixed clay for example, between which a body of insulating material consisting of foamed polystyrene is interposed.

For instance, in Patent EP 1085137 it is disclosed a building product provided with suitable mechanical constraint members, adapted to steadily keep the blocks in engagement with the respective insulating material.

In particular, this solution involves a series of small metal springs associable on the opposite sides of a respective insulating layer and each of which has respective elastically deformable projecting tongues. The tongues of each spring are bent inside surface cavities formed in the blocks and urged to get hooked on respective undercuts defined at the cavities themselves. In this manner a steady mechanical constraint is defined between said springs previously fastened to the insulating material and the brick-made blocks.

While this solution is able to form the insulating building product in a simple manner and quickly, it however has serious drawbacks, mainly connected with the presence of the small metal springs.

In fact, an important increase in the production costs results from the fact that high amounts of springs are required to be produced and stored in order to meet the requirements of a large-scale production, also taking into account the fact that different springs for different types of products may be necessary. Also to be added to the above costs are those for machinery and all working operations needed in order to obtain automated engagement of the small springs to the insulating panels and hooking of same to the brick-made blocks. It is also to be considered in this regard that the springs as well as the operations for fastening the same to the insulating panels must be carried out with great accuracy in order to ensure correct execution of hooking during the step of assembling them to the brick-made blocks.

DE-29617495-U1 teaches anchoring an insulating panel to a building element by at least one tubular netlike member, introduced along an opening obtained through said panel and building element. Foamed filling material passing through the meshes of the tubular netlike member is provided within the latter.

According to DE-102006021513-A1 which discloses a proceeding for manufacturing an insulating building product according to the pre-amble of claim 1 and a building product according to the pre-amble of claim 12, a tubular member provided with radial openings is teaches to introduced along respectively aligned bores obtained through an insulating panel and a brick raced by the insulating panel. Foaming material in injected through the tubular member to pass through the radial openings, thus reaching cavities which are present within the brick and between the brick and the insulating panel crossed by the tubular member. The tubular member is filled with the foaming material.

The technical task of the present invention is to conceive an insulating building product for buildings and a proceeding for manufacturing this insulating building product that are capable of obviating the mentioned drawbacks.

Within the scope of this technical task, it is an important aim of the invention to conceive an insulating building product for buildings having optimal thermal-insulation and soundproofing features, which at the same time is structurally simple and can be obtained at reduced costs.

In particular, the present invention aims at manufacturing an insulating building product that is free from mechanical hooking members that must be stored and subsequently coupled to the insulating material during manufacture of the building product.

Another important aim of the invention is to conceive a proceeding for manufacturing an insulating building product which is quick, simple and of reduced production costs.

The technical task mentioned and the aims specified are substantially achieved by a proceeding for manufacturing an insulating building product for buildings, comprising the features set out in claim 1 and/or in one or more of claims 2 to 11.

The technical task mentioned and the aims specified are in addition achieved by an insulating building product for buildings comprising the features set out in claim 12 and/or in one or more of claims 13 to 22.

Description of some preferred but not exclusive embodiments of an insulating building product for buildings in accordance with the present invention is now given hereinafter by way of non-limiting example and illustrated in the accompanying drawings, in which:
- Fig. 1 is an elevation front view partly in section of an insulating building product for buildings according to a first embodiment;
- Fig. 2 is an elevation front view partly in section of an insulating building product for buildings according to a second embodiment;
- Fig. 3 is a diagrammatic top plan view of an industrial plant in which a preferential proceeding for manufacturing a building product in accordance with the present invention is carried out;
- Fig 4 is a section view showing the embodiment of fig 2 during formation of the expansion inserts.

With reference to the drawings, an insulating building product for buildings in accordance with the present invention has been generally identified with 1.

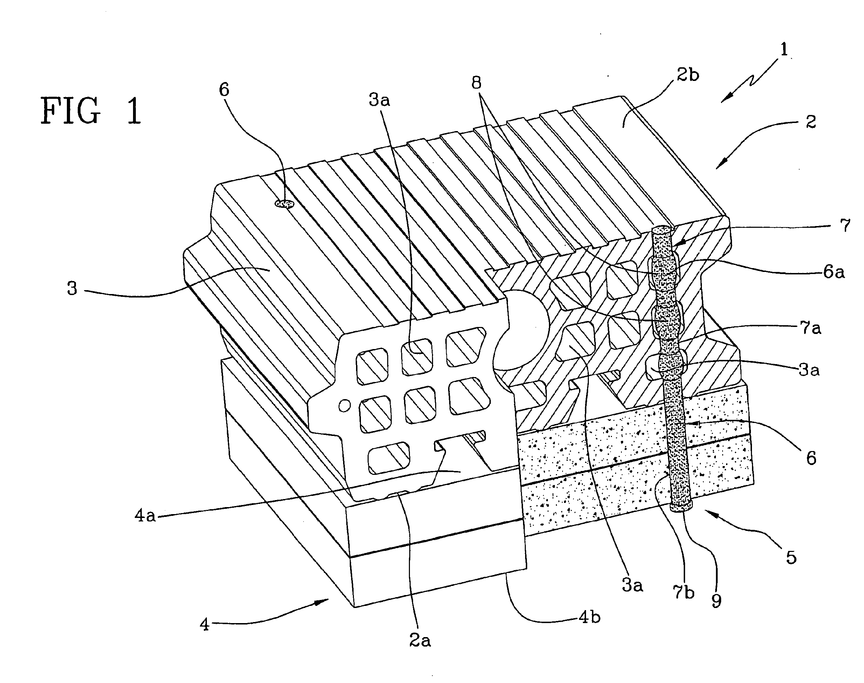

Referring particularly to the first embodiment shown in Fig. 1, the insulating building product 1 comprises a first block 2 preferably consisting of a clay brick. It would be recognised that block 2 can be made of any other building material suitable for performing its load-bearing and insulating function, such as stone, ceramic, terra cotta, concrete, etc.

Shown in Fig. 1 is a first block 2 consisting of a partially hollow body 3, of the type commonly referred to as "hollow brick" and having a plurality of inner through openings 3a usually oriented in a vertical direction on installation.

The product 1 further comprises at least one insulating element 4 associated with the first block 2 and made of foamed polyester, for example. In this case too it is to be pointed out that the insulating element 4 can be made of any material suitable for performing its thermal and/ acoustic-insulation function.

Preferably, the insulating element 4 is a plate-shaped element having a respective flat inner surface 4a coupled to an inner surface 2a of the first block 2 and a flat outer surface 4b opposite to the inner surface 2a.

The first block and the insulating element 4 are steadily linked to each other through suitable engagement means 5.

The engagement means 5 comprises at least one expansion insert 6 extending in a cavity 7 formed in the first block 2 and in the insulating element 4.

Advantageously, as shown in the drawings, the engagement means 5 comprises one or more, and preferably at least two, expansion inserts 6 extending in respective cavities 7.

In more detail, each cavity 7 is defined by a first hole 7a which is preferably a through hole, formed in the first block 2 and by a second through hole 7b formed in the insulating element 4. The first hole 7a extends over the whole width of the first block 2, passing through all openings 3a present along the path of the hole itself. The second hole 7b extends in alignment with, and in the continuation of the first hole so as to define a straight cavity 7 therewith. Alternatively, holes 7a, 7b can be obliquely oriented through the first block 2 and the insulating element 4.

The expansion insert 6 has at least one first anchoring portion 8 located at the first hole 7a and a second anchoring portion 9 located at the second hole 7b.

In more detail, in the example in Fig. 1, a plurality of anchoring portions 8 is provided, each of them being disposed in a respective inner opening 3a, while the second anchoring portion 9 is disposed at an end of the expansion insert 6 and extends at least partly on said outer surface 4b of the insulating element 4.

In a possible alternative embodiment not shown, the first block 2 is made of a solid brick, in which case the first and second anchoring portions 8, 9 are disposed in respective opposite end portions of the expansion insert 6, the first anchoring portion 8 acting against a corresponding outer surface 2b of the first block.

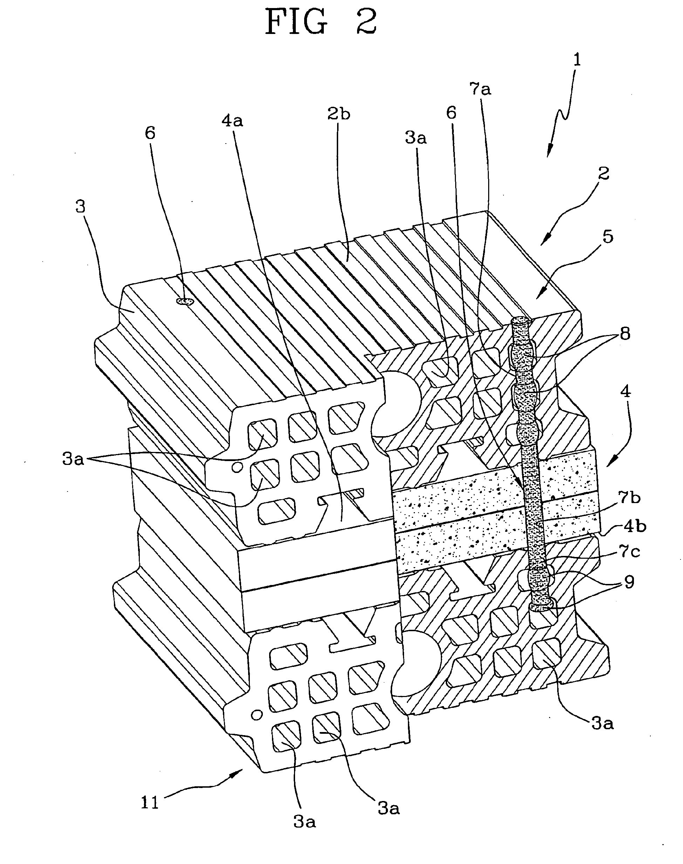

Shown in Fig. 2 is a second preferred embodiment of the insulating building product 1.

In this embodiment the insulating element 4 is interposed between the first block 2 and a second block 11 preferably consisting of a hollow brick too, provided with respective through openings 3a. However use of solid bricks is also possible in this case too.

Cavity 7 is defined by the first hole 7a formed in the first block 2, the second hole 7b formed in the insulating element 4 and a third hole 7c formed in the second block 11, in alignment with, and in the continuation of the first and second holes 7a, 7b. In this case too, holes 7a, 7b and 7c are mutually in register in axial-extension relationship, so as to form a straight cavity 7, and the building product 1 is preferably provided with two or more cavities 7 parallel to each other or oriented in an oblique direction.

Extending within each cavity 7 is said expansion insert 6, provided with at least one respective first anchoring portion 8 disposed in the first hole 7a and at least one second anchoring portion 9 disposed in the third hole 7c.

The expansion insert 6 can be provided with a series of first and second anchoring portions 8, 9, each of which is housed in one of the inner openings 3a of the respective first or second block 2, 11. Referring particularly to Fig. 2 by way of example, the expansion insert 6 has a plurality of first anchoring portions 8 disposed one after the other, each in a respective opening 3a of the first block 2 and a pair of second anchoring portions 9, each housed in one of the openings 3a of the second block 11, close to the insulating element 4.

The expansion insert 6 consists of an elongated body having a plurality of bulges 6a defining said anchoring portions 8, 9. These bulges 6a seen in cross-section advantageously have a greater size than the width of the respective first, second and/or third holes 7a, 7b, 7c.

In other words, bulges 6a housed in the inner openings 3a or out of cavities 7 constitute an enlargement of the section of element 6 to prevent mutual sliding between insert 6 and cavity 7. In this way, the anchoring portions 8, 9 ensure a steady engagement of blocks 2, 11 and of the insulating element 4.

The expansion insert 6 is preferably made of plastic material, based for example on polypropylene, silicone, chemical glue, chemical cement, or other suitable materials that, when inserted into cavity 7 are in a pasty or semifluid state, to be then submitted to an expansion and hardening process.

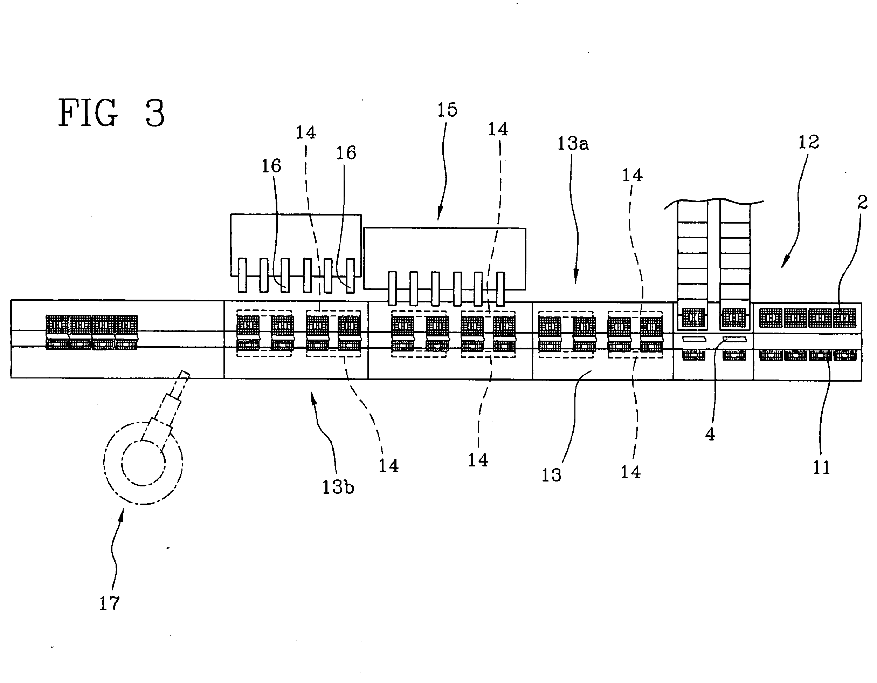

Referring particularly to Fig. 3, there is shown an industrial plant 12 for putting into practice a proceeding for manufacturing the above described building product 1, according to the embodiment seen in Fig. 2.

First of all, at least one first block 2 which has been previously formed is provided on a conveyor belt 13.

In the example in Fig. 3, simultaneously with the step of providing the first block 2, also the second block 11 is prearranged on the conveyor belt 13.

Subsequently, the insulating element 4 is directly provided on belt 13 and brought into contact with the first and second blocks 2, 11 at the respective inner surfaces 2a, 4a, 11a. This step is carried out at an assembling station 13a where respective clamps diagrammatically identified with 14 keep the first block 2 and the insulating element 4 steadily in engagement with each other.

Then belt 13 moves blocks 2, 11 and the insulating element 4 to an engagement station 13b where said components are steadily engaged with each other. This step is carried out through creation of a pair of through cavities 7 by means of a drilling operation preferably made by one or more drills or other suitable drilling device 15 that by a single operation forms the first, second and/or third holes 7a, 7b, 7c of each cavity 7.

Alternatively, the first and third holes 7a, 7c can be formed during the step of making blocks 2, 11 before the step of baking them. The second hole 7b too can be obtained in the insulating element during manufacture of same.

It should be noted that at least in the embodiment in Fig. 2 cavity 7 is not necessarily a through cavity, because the third hole 7c of the second block 11 can extend until about half way of the second block 11.

At this point, an expansion insert 6 is inserted into each cavity 7 to anchor the blocks and the insulating element 4 together through formation of said anchoring portions 8, 9 in the first and second blocks 2, 11.

In more detail, the anchoring portions 8, 9 are made through permanent set of the expansion insert 6 that, as above said, in this step is in a semifluid or pasty state.

In fact, insertion of the expansion insert 6 takes place by distributing a plastic material in a semifluid or pasty form at the inside of cavity 7. Subsequently, the plastic material is expanded inside cavity 7 and gradually hardened so as to form an elongated stiff body.

Distribution of the plastic material can be carried out through injection of same by means of a nozzle 16 connected to an extrusion apparatus for example, not shown as known by itself. Nozzle 16 is axially insertable into cavity 7 to gradually deliver the plastic material in said cavity 7, which material is preferably heated so that it reaches the semifluid state adapted to enable easy extrusion of same from the nozzle, while keeping a sufficient consistency in order to avoid undesirable percolations that would impair the structural integrity of the insert being made.

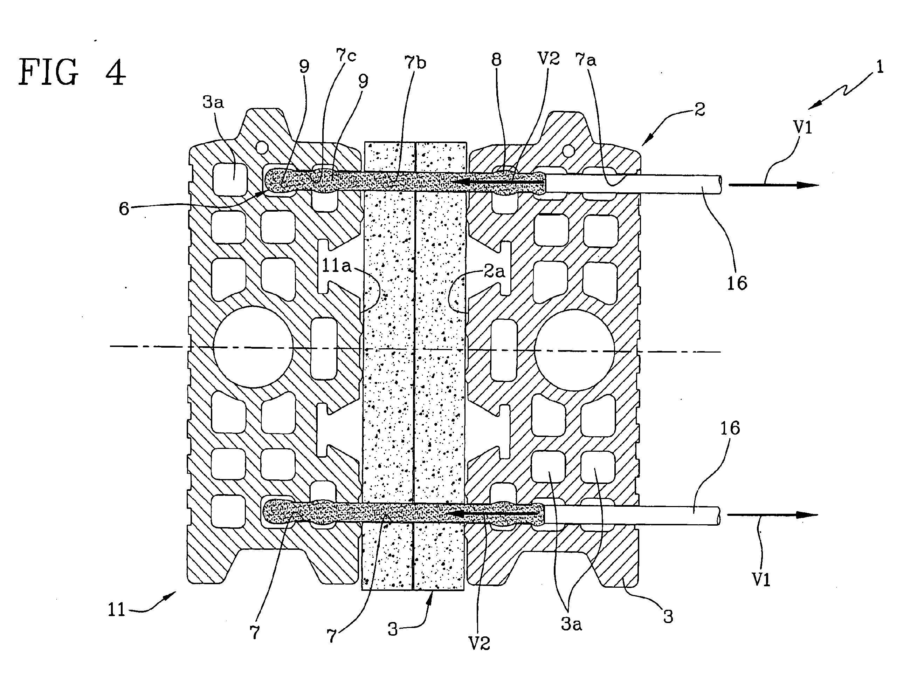

As clearly shown in Fig. 4, during distribution, nozzle 16 can be gradually pulled out of cavity 7, preferably at a speed V1 lower than the delivery speed V2 of the plastic material from the nozzle itself. Thus, as soon as the material so injected into cavity 7 adheres against one of the inner walls of the first block 2, of the insulating element 4 and/or of the second block 3, it is submitted to an expansion and swelling effect at the inside of openings 3a and/or against the outer surfaces 2b, 4b, so as to increase its cross section thus giving rise to formation of the anchoring portions 8, 9 having a greater size than that of cavity 7.

By cooling of the material laid down in cavity 7, solidification of the expansion insert 6 is caused, as well as definitive anchoring of the insulating element 4 to blocks 2, 3.

Alternatively, distribution of the plastic material can be carried out by mixing at least two components close to nozzle 16 or immediately upstream of said nozzle, which components, once in contact with each other, initiate a chemical cross-linking reaction giving rise to hardening. In addition or alternatively, the plastic material being distributed may comprise at least two components that, mixed with each other close to nozzle 16 and/or in cavity 7, can react generating gases that expand .in the material thus causing a volume increase and forming the anchoring portions 8, 9.

Said components, such as epoxy resins with the respective catalysts for example, are not described in detail as they are available on the market in different forms and types.

Subsequently, the building product 1 thus formed is picked up from the conveyor belt 13 by means of a mechanical handling device 17, to be transferred to a subsequent station for packaging of the finished product.

For manufacture of the building product 1 according to the preferred embodiment shown in Fig. 1, unlike that which has been previously said, the step of inserting element 6 is carried out by making the first anchoring portion 8 in one of the inner openings 3a of the first block 2, and making the second anchoring portion 9 on the outer surface 4b of the insulating element 4, in the absence of the second block 3. To this aim, a counter-mould can be moved close to the outer surface 4b of the insulating element, to facilitate moulding of the second anchoring portion.

The present invention achieves important advantages.

In particular, it will be recognised that blocks 2, 11 are engaged with the insulating element 4 without additional elements, made and stored at a time preceding their use. In fact, the expansion insert 6 delivered in a pasty form into cavity 7, enables a very steady engagement to be ensured between the components, thus eliminating use of additional mechanical hooking members. As a result, the building product 1 is simpler from a structural point of view and can be manufactured at lower costs.

In addition, the proceeding for manufacturing the building product 1 appears to be very simple and quick because particular care and accuracy is not required during the assembly. In fact, formation of the hole and delivery of the deformable insert 6 take place while blocks 2, 11 are maintained coupled to the insulating element 4, without any possibility of misalignment between the blocks themselves.

## Claims

1. A proceeding for manufacturing an insulating building product for buildings, comprising the steps of:
- providing at least one first block (2);
- providing at least one insulating element (4);
- moving the first block (2) and the insulating element (4) close to each other; and
- steadily engaging the first block (2) with the insulating element (4);
wherein said step of steadily engaging the first block (2) with the insulating element (4) comprises the steps of:
- forming at least one cavity (7) in the first block (2) and in the insulating element (4);
- distributing a plastic material in a semifluid form at the inside of the cavity (7), **characterized in that** said plastic material in a semifluid form adheres within said cavity (7) against inner walls of the first block (2) and insulating element (4);
- expanding said plastic material at the inside of the cavity (7); and
- hardening the plastic material so as to form an expansion insert (6) consisting of a single-piece elongated body,
wherein bulges (6a), the width of which in cross-section is greater than that of said cavity (7), are obtained in the expansion insert (6) as a consequence of the expanding step, to define anchoring portions (8, 9) preventing mutual sliding between the expansion insert (6) and cavity (7).

2. A proceeding as claimed in the preceding claim, wherein the step of distributing the plastic material is carried out through injection of the plastic material by means of a nozzle (16) inserted into said cavity (7).

3. A proceeding as claimed in one or more of the preceding claims, wherein said nozzle is gradually pulled out of the cavity during injection of the plastic material to a lower speed than the delivery speed of the plastic material from the nozzle to cause expansion of the injected plastic material.

4. A proceeding as claimed in one or more of the preceding claims, wherein during the distributing step the plastic material is heated to be brought to the semifluid state; said expanding and hardening steps taking place during cooling of the plastic material distributed in the cavity (7).

5. A proceeding as claimed in one or more of the preceding claims, wherein the step of distributing the plastic material is carried out through mixing of at least two components in said cavity (7); said hardening step taking place following a cross-linking reaction initiated by mixing of the two components.

6. A proceeding as claimed in one or more of the preceding claims, wherein the step of distributing the plastic material is carried out through mixing of at least two components in said cavity (7); said expanding step being carried out by gases generated following a reaction initiated by mixing of the two components.

7. A proceeding as claimed in one or more of the preceding claims, wherein said step of forming at least one cavity (7) is carried out by drilling the first block (2) and the insulating element (4) previously moved close to each other, to form respective through holes (7a, 7b) disposed consecutively in alignment.

8. A proceeding as claimed in one or more of the preceding claims, wherein following the expanding step, there is formed at least one first anchoring portion (8) of the expansion insert (6) in at least one inner opening (3a) exhibited by said block (2), as well as a second anchoring portion (9) acting on an outer surface (4b) of the insulating element (4) out of the hole (7b) formed in the insulating element (4) itself.

9. A proceeding as claimed in one or more of the preceding claims, further comprising the steps of:
- providing at least one second block (11);
- interposing the insulating element (4) between the first and second blocks (2, 11);
- said expansion insert (6) being formed in the cavity (7) made in the first block (2), in the second block (11) and in the insulating element (4) to keep the blocks (2, 11) linked to the insulating element (4) itself.

10. A proceeding as claimed in the preceding claim, wherein following the expanding step, at least one first anchoring portion (8) of the expansion insert (6) is made in at least one inner opening (3a) exhibited by said first block (2), as well as at least one second anchoring portion (9) disposed in at least one inner opening (3a) of the second block (11).

11. A proceeding as claimed in one or more of claims 8 to 10, wherein said anchoring portions (8, 9) are made during the step of distributing the plastic material inside the cavity (7), the cross-section of the elongated body being increased so as to determine a plurality of bulges (6a) defining said anchoring portions (8, 9).

12. A building product for buildings, comprising:
- at least one first block (2);
- at least one insulating element (4) associated with said first block (2); and
- engagement means (5) for linking the first block (2) to the insulating element (4);
wherein said engagement means (5) comprises at least one expansion insert (6), extending in a respective cavity (7) formed in the first block (2) and in said insulating element (4) **characterized in that** said expansion insert (6) consists of a single-piece elongated body, which adheres within said cavity (7) against inner walls of the first block (2) and insulating element (4) and has bulges (6a) the width of which in cross-section is greater than that of said cavity (7), for defining respective anchoring portions (8, 9) operating in abutment relationship against said at least one first block (2) and said insulating element (4).

13. A building product as claimed in claim 12, wherein said cavity (7) comprises at least one first through hole (7a) formed in said first block (2) and at least one second through hole (7b) formed in said insulating element (4), in the continuation of the first hole (7a).

14. A building product as claimed in one or more of claims 12 to 13, wherein said expansion insert (6) has at least one first anchoring portion (8) disposed at the first hole (7a) and a second anchoring portion (9) disposed at the second hole (7b).

15. A building product as claimed in the preceding claim, wherein said first block (2) comprises a body (3) that is at least partly hollow and has at least one inner opening (3a); said first anchoring portion (8) extending in said inner opening (3a) and said second anchoring portion (9) being disposed out of the second hole (7b) and extending at least partly on an outer surface (4b) of the insulating element (4).

16. A building product as claimed in one or more of claims 12 to 15, further comprising at least one second block (11); said insulating element (4) being interposed between the first block (2) and the second block (11).

17. A building product as claimed in the preceding claim, wherein said cavity (7) comprises at least one first through hole (7a) formed in said first block (2), at least one second through hole (7b) formed in said insulating element (4), in the continuation of the first hole (7a), and a third hole (7c) formed in the second block (11) in the extension of said second and first holes (7a, 7c).

18. A building product as claimed in the preceding claim, wherein said expansion insert (6) comprises at least one first anchoring portion (8) disposed at the first hole (7a) and at least one second anchoring portion (9) disposed at the third hole (7c).

19. A building product as claimed in one or more of claims claims 12 to 18, wherein each block (2, 11) comprises a body (3) that is at least partly hollow and has at least one inner opening (3a); each anchoring portion (8, 9) extending in a respective inner opening (3a).

20. A building product as claimed in one or more of claims 12 to 19, wherein said expansion insert (6) is expanded inside the cavity (7).

21. A building product as claimed in one or more of claims 12 to 20, wherein said engagement means (5) comprises at least two expansion inserts (6) inserted into respective cavities (7).

## Patentansprüche

1. Herstellungsverfahren eines isolierenden Konstruktionsproduktes für Gebäude, umfassend die folgenden Schritte:
- zumindest ein ersten Block (2) anordnen;
- zumindest ein Isolierelement(4) anordnen;
- den ersten Block (2) mit dem Isolierelement (4) stabil verbinden;
wobei der genannte Schritt des stabilen Verbindens des ersten Blocks (2) mit dem Isolierelement (4) folgende Schritte umfasst:
- Herstellen von zumindest einer Ausnehmung (7) im ersten Block (2) und im Isolierelement (4);
- Verteilen innerhalb der Ausnehmung (7) eines plastischen Materials in halbflüssiger Form, **dadurch gekennzeichnet, dass** das genannte plastische Material in halbflüssiger Form am Inneren der genannten Ausnehmung (7) gegen die inneren Wände des ersten Blocks (2) und des Isolierelements (4)haftet;
- Ausschäumen des genannten plastischen Materials innerhalb der Ausnehmung (7); und
- Härten des plastischen Materials um einen Schaumeinsatz (6) zu bilden, der aus einem verlängerten, einstückigen Körper besteht, wobei im Schaumeinsatz, als Folge des Ausschäumungsschrittes, Quellungen (4)erhalten werden, deren Weite im Querschnitt größer ist als jene der genannten Ausnehmung (7), um die jeweiligen Verankerungsteile (8,9) festzulegen, die das gegenseitige Verschieben zwischen dem Schaumeinsatz (6) und der Ausnehmung (7) verhindern.

2. Verfahren nach dem vorhergehenden Patentanspruch, wobei der Schritt der Verteilung des plastischen Materials durch Einspritzen des plastischen Materials selbst mittels einer Düse (16) in die genannte Ausnehmung (7) ausgeführt wird.

3. Verfahren nach einem oder mehreren der vorhergehenden Patentansprüche, wobei die genannte Düse schrittweise aus der Ausnehmung während des Einspritzens des plastischen Materials mit einer geringeren Geschwindigkeit als die Ausgangsgeschwindigkeit des plastischen Materials aus der Düse selbst herausgezogen wird, um das Schäumen des eingespritzten plastischen Materials festzulegen.

4. Verfahren nach einem oder mehreren der vorhergehenden Patentansprüche, wobei während des Schritts der Verteilung das plastische Material erwärmt ist, um in den halbflüssigen Zustand gebracht zu werden; wobei die genannten Schaum- und Härtungsschritte während der Kühlung des verteilten plastischen Materials in der Ausnehmung (7) stattfinden.

5. Verfahren nach einem oder mehreren der vorhergehenden Patentansprüche, wobei die Phase der Materialverteilung durchgeführt wird, indem zumindest zwei Bestanteile in der genannten Ausnehmung (7) vermischt werden; wobei der genannte Härtungsschritt nach einer Reaktion der Vernetzung erfolgt die durch die Mischung der beiden Bestandteile ausgelöst wird.

6. Verfahren nach einem oder mehreren der vorhergehenden Patentansprüche, wobei der Schritt der Materialverteilung durchgeführt wird, indem zumindest zwei Bestandteile in der genannten Ausnehmung (7) vermischt werden; wobei der genannte Schäumungsschritt durch Gase durchgeführt wird, die sich durch die Mischung der beiden Bestandteile bilden.

7. Verfahren nach einem oder mehreren der vorhergehenden Patentansprüche, wobei der genannte Schritt der Herstellung zumindest einer Ausnehmung (7) durchgeführt wird, indem der erste Block (2) und das Isolierelement (4) vorher aneinander angenähert durchbohrt werden, um die jeweiligen durchgehenden Bohrungen (7a,7b)nacheinander folgend ausgerichtet auszuführen.

8. Verfahren nach einem oder mehreren der vorhergehenden Patentansprüche, bei dem nach dem Schäumungsschritt, zumindest ein erster Verankerungsteil (8) des Schäumungsteils (6) in zumindest einer inneren vom genannten Block (2) aufgewiesenen Öffnung (3a) und ein zweiter auf eine äußere Fläche (4) des Isolierelements (4) wirkende Verankerungsteil (9) außerhalb der aus dem Isolierelement (4) selbst ausgenommene Bohrung (7b) hergestellt werden.

9. Verfahren nach einem oder mehreren der vorhergehenden Patentansprüche, umfassend außerdem folgende Schritte:
- Bereitstellen zumindest eines zweiten Blocks (11);
- Dazwischenschalten des Isolierungselementes (4) zwischen dem ersten und dem zweiten Block (2,11);
- wobei der genannte Schaumeinsatz (6) in der im ersten Block (2),im zweiten Block (11) und im Isolierelement (4), gebildeten Ausnehmung (7) ausgeführt wird, um die Blöcke (2,11) an das Isolierelement (4) selbst gebunden zu halten.

10. Verfahren nach einem oder mehreren der vorhergehenden Patentansprüche, indem nachdem der Schaumschritt, zumindest eines ersten Verankerungsteils (8) des Schaumteils (6) in zumindest einer inneren von diesen ersten Block (2) aufgewiesenen Öffnung (3a) und ein zumindest ein zweites in zumindest einer inneren Öffnung (3a) des zweiten Blocks (11) angeordnete Verankerungsteil (9) ausgeführt werden.

11. Verfahren nach einem oder mehreren der vorhergehenden Patentansprüche von 8 bis 10, wobei die genannten Verankerungsteile (8,9) während des Verteilungsschritts des plastischen Materials innerhalb der Ausnehmung (7), hergestellt werden, indem der Querschnitt des verlängerten Körpers vergrößert wird, um eine Vielzahl von Quellungen (6a) festzustellen die genannten Verankerungsteile (8,9)zu definieren.

12. Konstruktionsprodukt, umfassend:
- zumindest einen ersten Block (2);
- zumindest ein Isolierelement (4), zugeordnet zu dem genannten ersten Block (2); und
- Eingriffsmittel (5), um den ersten Block (2) an das Isolierelement (4) zu binden; wobei die genannten Eingriffsmittel (5) zumindest einen Schaumeinsatz (6) umfassen, der sich in eine jeweilige aus dem ersten Block (2) und dem genannten Isolierelement (4) ausgenommen Ausnehmung (7) anhaftet, **dadurch gekennzeichnet dass** der genannte Schaumeinsatz (6) aus einem verlängerten einstückigen Körper gebildet ist, der am Inneren der genannten Ausnehmung (7) gegen die inneren Wände des ersten Blocks (2) und des Isolierelements (4) anhaftet und Quellungen (6a) umfasst, deren Weite im Querschnitt größer ist als jene der genannten Ausnehmung (7), um jeweilige Verankerungsteile (8,9) zu definieren, die als Vorschlag gegen den genannten ersten Block (2) und genannten Isolierelement (4) arbeiten.

13. Konstruktionsprodukt nach Patentanspruch 12, wobei die genannte Ausnehmung (7) zumindest eine erste durchgehende, in dem genannten ersten Block (2) ausgeführte Bohrung (7a) umfasst und zumindest eine zweite durchgehende Bohrung (7b) umfasst, im genannten Isolierelement (4), hergestellt auf der Fortsetzung der ersten Bohrung (7a).

14. Konstruktionsprodukt nach einem der vorhergehenden Patentansprüchen von 12 bis 13, wobei der genannte Schaumeinsatz (6) zumindest einen ersten im Anschluss des der ersten Bohrung (7a) angeordneten Verankerungsteils (8) angeordnet und ein zweites Verankerungsteil (9) im Anschluss an die zweite Bohrung (7b) aufweist.

15. Konstruktionsprodukt nach dem vorhergehenden Patentanspruch, wobei der genannte erste Block (2) zumindest einen teilweise hohlen Körper (3) umfasst, der zumindest eine interne Öffnung aufweist (3a); wobei der genannte erste Verankerungsteil (8) sich in der genannten inneren Öffnung abwickelt, und der genannte zweite Verankerungsteil (9) außerhalb der zweiten Bohrung (7b) angeordnet ist und sich zumindest teilweise auf der äußeren Oberfläche (4) des Isolierelements (4)aufwickelt.

16. Konstruktionsprodukt nach einem der vorhergehenden Patentansprüchen von 12 bis 15, umfassend außerdem zumindest einen zweiten Block (11); wobei das genannte Isolierelement (4) zwischen dem ersten Block (2) und dem zweitem Block (11) zwischengeschoben ist.

17. Konstruktionsprodukt nach dem vorhergehenden Patentanspruch, wobei die genannte Ausnehmung (7) zumindest eine durchgehende Bohrung (7a), die in dem genannten ersten Block (2) hergestellt ist, zumindest eine zweite durchgehende Bohrung (7), die in dem genannten Isolierelement auf der Fortsetzung der ersten Bohrung (7a) hergestellt ist, und eine dritte Bohrung (7c) umfasst, die im zweiten Block (11) als Fortsetzung der genannten ersten und zweiten Bohrung (7a,7c) hergestellt ist.

18. Konstruktionsprodukt nach dem vorhergehenden Patentanspruch, wobei der genannte Schaumeinsatz (6) zumindest ein erstes Verankerungsteil (8) im Bereich der ersten Bohrung (7a) umfasst und zumindest ein zweites Verankerungsteil (9) umfasst das im Bereich der dritten Bohrung (7c)angeordnet ist.

19. Konstruktionsprodukt nach einem der vorhergehenden Patentansprüchen von 12 bis 18, wobei jeder Block (2,11) zumindest einen teilweise hohlen Körper (3) umfasst, der zumindest eine innere Öffnung (3a) aufweist; wobei jeder Verankerungsteil (8,9) sich um jeweils eine jeweilige innere Öffnung (3a) entwickelt.

20. Konstruktionsprodukt nach einem der vorhergehenden Patentansprüchen von 12 bis 19, wobei der genannte Schaumeinsatz (6) innerhalb der Öffnung (7) geschäumt ist.

21. Konstruktionsprodukt nach einem der vorhergehenden Patentansprüchen von 12 bis 20, wobei die genannten Eingreifmittel (5) zumindest zwei plastische Verformungselemente (6) umfassen, die in jeweiligen Ausnehmungen (7) eingesetzt sind.

## Revendications

1. Procédé de fabrication d'un produit de construction isolant pour le bâtiment, comprenant les étapes de:
- prévoir au moins un premier bloc (2);
- prévoir au moins un élément isolant (4);
- déplacer le premier bloc (2) et l'élément isolant (4) en les rapprochant réciproquement; et
- engager fixement le premier bloc (2) à l'élément isolant (4);
dans lequel ladite étape d'engager fixement le premier bloc (2) à l'élément isolant (4) comprend les étapes de:
- former au moins une cavité (7) dans le premier bloc (2) et dans l'élément isolant (4);
- distribuer un matériau plastique sous forme semi-fluide à l'intérieur de la cavité (7), **caractérisé en ce que** ledit matériau plastique sous forme semi-fluide adhère dans ladite cavité (7) contre les parois intérieures du premier bloc (2) et de l'élément isolant (4);
- détendre ledit matériau plastique à l'intérieur de la cavité (7); et
- durcir ledit matériau plastique de manière à former une pièce insérée à expansion (6) se composant d'un corps allongé d'un seul tenant,
dans lequel des renflements (6a) dont la largeur en coupe transversale est supérieure à celle de ladite cavité (7) sont obtenus dans la pièce insérée à expansion (6) en conséquence de l'étape de détente, pour définir des portions d'ancrage (8, 9) empêchant le coulissement réciproque entre la pièce insérée à expansion (6) et la cavité (7).

2. Procédé selon la revendication précédente, dans lequel l'étape de distribuer le matériau plastique est effectuée par injection du matériau plastique par l'intermédiaire d'une tuyère (16) introduite dans ladite cavité (7).

3. Procédé selon une ou plusieurs des revendications précédentes, dans lequel ladite tuyère est extraite graduellement de la cavité pendant l'injection du matériau plastique à une vitesse inférieure à la vitesse de sortie du matériau plastique de la tuyère pour causer l'expansion du matériau plastique injecté.

4. Procédé selon une ou plusieurs des revendications précédentes, dans lequel pendant l'étape de distribution le matériau plastique est chauffé pour être amené à l'état semi-fluide; lesdites étapes de détente et durcissement ayant lieu pendant le refroidissement du matériau plastique distribué dans la cavité (7).

5. Procédé selon une ou plusieurs des revendications précédentes, dans lequel l'étape de distribuer le matériau plastique est effectuée en mélangeant au moins deux éléments composants dans ladite cavité (7); ladite étape de durcissement ayant lieu après une réaction de réticulation déclenchée par le mélange des deux éléments composants.

6. Procédé selon une ou plusieurs des revendications précédentes, dans lequel l'étape de distribuer le matériau plastique est effectuée en mélangeant au moins deux éléments composants dans ladite cavité (7); ladite étape de détente étant effectuée par des gazes engendrés à la suite d'une réaction déclenchée par le mélange des deux éléments composants.

7. Procédé selon une ou plusieurs des revendications précédentes, dans lequel ladite étape de former au moins une cavité (7) est effectuée en perçant le premier bloc (2) et l'élément isolant (4) précédemment rapprochés réciproquement, à former des trous (7a, 7b) respectifs disposés consécutivement en alignement.

8. Procédé selon une ou plusieurs des revendications précédentes, dans lequel après l'étape de détente, il y a la formation d'au moins une première portion d'ancrage (8) de la pièce insérée à expansion (6) dans au moins une ouverture intérieure (3a) présentée par ledit bloc (2), et également d'une deuxième portion d'ancrage (9) agissant sur une surface extérieure (4b) de l'élément isolant (4) au-dehors du trou (7b) formé dans l'élément isolant (4) lui-même.

9. Procédé selon une ou plusieurs des revendications précédentes, comprenant en outre les étapes de:
- prévoir au moins un deuxième bloc (11);
- interposer l'élément isolant (4) entre le premier et le deuxième blocs (2, 11);
- ladite pièce insérée à expansion (6) étant formée dans la cavité (7) réalisée dans le premier bloc (2), dans le deuxième bloc (11) et dans l'élément isolant (4) pour maintenir les blocs (2, 11) engagés à l'élément isolant (4) lui-même.

10. Procédé selon la revendication précédente, dans lequel après l'étape de détente, au moins une première portion d'ancrage (8) de la pièce insérée à expansion (6) est réalisée dans au moins une ouverture intérieure (3a) présentée par ledit premier bloc (2), et au moins une deuxième portion d'ancrage (9) est réalisée et disposée dans au moins une ouverture intérieure (3a) du deuxième bloc (11).

11. Procédé selon une ou plusieurs des revendications 8 à 10, dans lequel lesdites portions d'ancrage (8, 9) sont réalisées pendant l'étape de distribuer le matériau plastique à l'intérieur de la cavité (7), en augmentant la coupe transversale du corps allongé de manière à déterminer une pluralité de renflements (6a) définissant lesdites portions d'ancrage (8, 9).

12. Produit de construction pour le bâtiment, comprenant:
- au moins un premier bloc (2);
- au moins un élément isolant (4) associé audit premier bloc (2); et
- des moyens d'engagement (5) pour engager le premier bloc (2) à l'élément isolant (4);
dans lequel lesdits moyens d'engagement (5) comprennent au moins une pièce insérée à expansion (6), s'étendant dans une cavité respective (7) formée dans le premier bloc (2) et dans ledit élément isolant (4), **caractérisé en ce que** ladite pièce insérée à expansion (6) se compose d'un corps allongé d'un seul tenant, lequel adhère dans ladite cavité (7) contre les parois intérieures du premier bloc (2) et de l'élément isolant (4) et comprend des renflements (6a) dont la largeur en coupe transversale est supérieure à celle de ladite cavité (7), pour définir des portions d'ancrage (8, 9) respectives opérant en butée contre ledit au moins un premier bloc (2) et ledit élément isolant (4).

13. Produit de construction selon la revendication 12, dans lequel ladite cavité (7) comprend au moins un premier trou de passage (7a) formé dans ledit bloc (2) et au moins un deuxième trou de passage (7b) formé dans ledit élément isolant (4), dans la continuation du premier trou (7a).

14. Produit de construction selon une ou plusieurs des revendications 12 à 13, dans lequel ladite pièce insérée à expansion (6) a au moins une première portion d'ancrage (8) disposée au niveau du premier trou (7a) et une deuxième portion d'ancrage (9) disposée au niveau du deuxième trou (7b).

15. Produit de construction selon la revendication précédente, dans lequel ledit premier bloc (2) comprend un corps (3) qui est au moins partiellement creux et a au moins une ouverture intérieure (3a); ladite première portion d'ancrage (8) s'étendant dans ladite ouverture intérieure (3a) et ladite deuxième portion d'ancrage (9) étant disposée au dehors du deuxième trou (7b) et s'étendant au moins partiellement sur une surface extérieure (4b) de l'élément isolant (4).

16. Produit de construction selon une ou plusieurs des revendications 12 à 15, comprenant en outre au moins un deuxième bloc (11); ledit élément isolant (4) étant interposé entre le premier bloc (2) et le deuxième bloc (11).

17. Produit de construction selon la revendication précédente, dans lequel ladite cavité (7) comprend au moins un premier trou de passage (7a) formé dans ledit premier bloc (2), au moins un deuxième trou de passage (7b) formé dans ledit élément isolant (4), dans la continuation du premier trou (7a), et un troisième trou (c) formé dans le deuxième bloc (11) dans la continuation desdits deuxième et premier trous (7a, 7c).

18. Produit de construction selon la revendication précédente, dans lequel ladite pièce insérée à expansion (6) comprend au moins une première portion d'ancrage (8) disposée au niveau du premier trou (7a) et au moins une deuxième portion d'ancrage (9) disposée au niveau du troisième trou (7c).

19. Produit de construction selon une ou plusieurs des revendications 12 à 18, dans lequel chaque bloc (2, 11) comprend un corps (3) qui est au moins partiellement creux et présente au moins une ouverture intérieure (3a); chaque portion d'ancrage (8, 9) s'étendant dans une ouverture intérieure respective (3a).

20. Produit de construction selon une ou plusieurs des revendications 12 à 19, dans lequel ladite pièce insérée à expansion (6) est détendue à l'intérieure de la cavité (7).

21. Produit de construction selon une ou plusieurs des revendications 12 à 20, dans lequel lesdits moyens d'engagement (5) comprennent au moins deux pièces insérées à expansion (6) introduites dans des cavités respectives (7).
